# EUROPÄISCHE PATENTSCHRIFT

(11) **EP 1 289 662 B1**
(45) Veröffentlichungstag und Bekanntmachung des Hinweises auf die Patenterteilung: **08.12.2004**
(21) Anmeldenummer: 01936412.4
(22) Anmeldetag: 30.05.2001
(51) Int. Cl.: B02C 13/09

(54) **SCHLAGSCHERE**
GUILLOTINE SHEARS
CISAILLE-GUILLOTINE

(30) Priorität: 30.05.2000 DE 20009718 U
(43) Veröffentlichungstag der Anmeldung: 12.03.2003
(73) Patentinhaber: Plahuta, Igor, 58708 Menden (DE); Becker, Udo, 58706 Menden (DE)
(72) Erfinder: PLAHUTA, Igor, 58708 Menden (DE); BECKER, Udo, 58706 Menden (DE)
(74) Vertreter: Haverkamp, Jens
(86) Internationale Anmeldenummer: PCT/EP2001/006151
(87) Internationale Veröffentlichungsnummer: WO 2001/091905

(56) Entgegenhaltungen:
- DE-A- 19 514 951
- DE-C- 4 328 506
- GB-A- 1 104 087
- GB-A- 1 319 704

## Beschreibung

Die Erfindung betrifft eine Schlagschere mit einem mit einzelnen Hackmessern in einer vorbestimmten Anordnung besetzten Rotor und mit zumindest einem gegenüber der Drehbewegung des Rotors grundsätzlich feststehenden, in einem zum Rotor statorseitig angeordneten Messerhalter gehaltenen Messer oder Meseranordnung, wobei der Messerhalter um eine Achse parallel zur Drehachse des Rotors gegenüber dem Stator bewegbar ist.

Schlagscheren werden beispielsweise im Recyclingbereich zum Nachzerkleinern eines bereits vorzerkleinerten Gutes eingesetzt. Eine Vorzerkleinerung von recyclefähigen Gegenständen erfolgt etwa durch eine Rotorschere. Eine solche vorbekannte Schlagschere umfaßt einen motorisch angetriebenen Rotor, der eine Vielzahl von einzelnen Hackmessem trägt. Die Hackmesser wirken bei einem Betrieb der Schlagschere zur Zerkleinerung des jeweils gewünschten Gutes mit einem statorseitig gehaltenen, feststehenden Messer oder einer aus mehreren, in einer Reihe angeordneten Messern gebildeten Meseranordnung zusammen, welches bzw. welche sich über die gesamte Länge des Rotors erstreckt. Das Messer des Stators ist in einem Messerhalter verschraubt gehalten, wobei vorgesehen ist, daß der Messerhalter in radialer Richtung zur Drehachse des mit Hackmessern besetzten Rotors einrichtbar ist, um nicht nur den Schnittspalt primär einstellen, sondern auch um den Schnittspalt nach einer Abnutzung der Messer nachstellen zu können. Zu diesem Zweck ist das Messer mit dem Messerhalter verschraubt und somit in seiner Position fixiert, während der Messerhalter über mehrere Stellschrauben gegenüber dem Stator in der oben beschriebenen Richtung einstellbar ist. Aus DE 195 14 951 C2 ist ein Abfall-Zerkleinerer bekannt, bei dem die Einstellung des Schnittspaltes durch Einsatz eines Exzenters erfolgt, welches gegenüber dem Einsatz von mehreren Stellschrauben vereinfacht ist.

Bei einem Wechsel des feststehenden Messers muß das Messer aus dem Messerhalter entfernt und durch ein neues ersetzt werden; zusätzlich muß der Schnittspalt zwischen dem neuen Messer und den auf den Rotor befindlichen Hackmessern neu eingestellt werden. Insbesondere bei einer Zerkleinerung eines sehr harten Gutes ist die Abnutzung des feststehenden Messers so hoch, daß dieses mehrfach pro Woche gewechselt werden muß. Ein solches Auswechseln des Messers ist zeitaufwendig; insbesondere steht die Schlagschere in dieser Zeit still. Um die Wechselintervalle zu verlängern, ist die Einstellbarkeit des Schnittspaltes vorgesehen worden, da eine solche Schnittspaltnachstellung mit kürzerem Zeitaufwand durchführbar ist, verglichen mit der für eine Messerauswechslung benötigten Zeitspanne. In Kauf genommen wird bei einer solchen Maßnahme, jedoch, daß nach einer Schnittspaltnachstellung mit stumpfen Messern geschnitten wird, was sich mitunter nachteilig auf das gewünschte Schnittergebnis auswirken kann. Überdies besteht bei einem Betrieb einer Schlagschere mit stumpfen Messern die Gefahr, daß diese überlastet wird, was zu einem Blockieren des Rotors führen kann. Zu diesem Zweck ist bei einem Spänebrecher gemäß DE 43 28 506 C1 vorgesehen, den Messerhalter um eine Achse parallel zur Drehachse des Rotors an dem oberen Ende einer Schwinge schwenkbar anzuordnen, um durch diese Maßnahme eine Außereingriffstellung gegenüber den Hackmessern des Rotors bereitstellen zu können. Diese Außereingriffstellung des statorseitigen Messers gegenüber den Hackmessem des Rotors erfolgt unter Bildung eines Grobteilauslasses als Überlastsicherung, wenn ein wählbarer Schneidwiderstand überschritten worden ist, damit derartige, nicht zerkleinerbare Gegenstände sofort aus dem Schnittspalt herausgebracht werden können, ohne daß der Rotor angehalten werden müßte.

Ausgehend von diesem diskutierten Stand der Technik liegt der Erfindung die Aufgabe zugrunde, eine Schlagschere der eingangs genannten Art bereit zu stellen, bei der die Standzeit erhöht und ein Messerwechsel erleichtert ist.

Diese Aufgabe wird erfindungsgemäß dadurch gelöst, daß der Messerhalter zumindest zwei, zweckmäßigerweise mit einem jeweils gleichen Winkelabstand zueinander angeordnete Messer oder Messeranordnungen trägt und um die parallel zur Drehachse des Rotors verlaufende Achse drehbar ist, so daß jedes Messer oder jede Messeranordnung des Messerhalters in eine mit den Hackmessem des Rotors zusammenwirkende Schnittstellung gebracht werden kann und in der Schnittstellung jeweils ein Messer oder eine Messeranordnung mit den Hackmessem des Rotors zusammenwirkt und in dieser Stellung jedes Messers oder jede Messeranordnung bezüglich des Zusammenwirkens mit den Hackmessern des Rotors festlegbar ist.

Bei der erfindungsgemäßen Schlagschere ist vorgesehen, daß der Messerhalter über zumindest zwei mit einem Winkelabstand zueinander angeordnete, zweckmäßigerweise einem gleichen Winkelabstand zueinander angeordnete Messer bzw. Messeranordnungen verfügt. Der Messerhalter ist um eine parallel zur Drehachse des Rotors verlaufende Achse drehbar, so daß jeweils eines der Messer oder der Messeranordnungen des Messerhalters sich in ihrer Schnittstellung und somit mit den Hackmessern des Rotors zusammenwirkend befinden können.

Somit kann unter Ausnutzung der Drehbarkeit des Messerhalters ohne großen Aufwand ein abgenutztes Messer lediglich durch Drehen des Messerhalters aus seiner Schnittposition herausgebracht und das zweite Messer in die Schnittposition eingebracht werden kann. Ein tatsächliches Auswechseln der einzelnen Messer gegen neue kann auf einen Zeitpunkt verlegt werden, in dem die Schlagschere ohnehin nicht in Betrieb ist. Es werden dann in einem Vorgang sämtliche Messer des Messerhalters ausgetauscht. Ferner kann vorgesehen sein, daß ein Austausch des nicht in seiner Schnittstellung befindlichen Messers auch bei einem Betrieb der Schlagschere, während sich ein weiteres, von diesem Messerhalter getragenes Messer in seiner Schnittstellung befindet, durchgeführt wird. Der Messerhalter ist in denjenigen Stellung, in denen sich ein Messer in seiner Schnittstellung befindet, gegenüber dem Stator festlegbar, so daß bei einem Betrieb der Schlagschere eine Übertragung der Drehbewegung des Rotors über seine Hackmesser und das zu zerkleinernde Gut nicht zu einer Verschwenkung des Messerhalters führt.

Zur Herbeiführung der gewünschten Drehbarkeit des Messerhalters kann dieser an seinen beiden Enden jeweils einen Lagerzapfen aufweisen, der in eine jeweils in eine Stirnseite des Stators vom äußeren, seitlichen Rand beginnende, zweckmäßigerweise horizontal verlaufende Lagemut eingesetzt ist.

Zum Festlegen des Messerhalters gegenüber einer Drehbewegung und zum Ableiten der bei einem Betrieb der Schlagschere auf den Messerhalter einwirkenden Kräfte kann ein schwenkbar am Stator angelenkter und sich am Messerhalter abstützender Stützarm vorgesehen sein, daß der Stützarm, an dessem freien Ende sich der Meserhalter befindet, ist schwenkbar zu dem Rotor angeordnet, so daß der gesamte Meserhalter von dem Rotor weggeschwenkt werden kann. Dies kann dazu ausgenutzt werden, um eine Schnittspalteinstellung vornehmen zu können. Eine solche Schnittspalteinstellung kann beispielsweise durch Einsatz eines Exzenters oder auch einer entsprechenden auf den Stützarm einwirkenden Stellschraube vorgesehen sein.

Der Stützarm kann ebenso dazu dienen, Teil einer Überlastsicherung zu sein. Der Stützarm ist dann zweckmäßigerweise über einen eine Sollbruchstelle aufweisenden Bolzen angelenkt. Bei Überschreiten der vorgesehenen Schnittkraft bricht der die Sollbruchstelle aufweisende Bolzen und der Messerhalter schwenkt von dem Rotor weg und ein Schaden an den Messern bzw. Hackmessem vermieden ist.

In einer weiteren Ausgestaltung kann vorgesehen sein, daß eine Überlastsicherung in einer solchen Art und Weise vorgesehen ist, daß bei Feststellen einer Überlast der Antrieb der Schlagschere automatisch ausgeschaltet wird oder auch, daß die Drehbarkeit des Messerhalters ausgenutzt wird, um das in der Schnittstellung befindliche Messer bzw. die in der Schnittstelle befindliche Messeranordnung zur Vergrößerung des Schnittspaltes aus ihrer mit den Hackmessern des Rotors zusammenwirkenden Schnittstellung herauszudrehen.

In einer zweckmäßigen Weiterbildung ist vorgesehen, daß die Schlagschere neben dem zuvor beschriebenen statorseitigen Messerhalter einen weiteren entsprechend ausgebildeten Messerhalter umfaßt, der beispielsweise etwa spiegelsymmetrisch zur vertikalen Mittelebene des Rotors statorseitig angeordnet ist. Insbesondere ist die Verschwenkbarkeit bei einer zusätzlichen Anordnung eines solches Messerhalters vorteilhaft, da in dieser am hinteren Ende des Siebes befindlichen Position ansonsten eine Zugänglichkeit des oder der Messer kaum möglich wäre. Aufgrund der geringeren auf das in seiner Schnittstellung befindliche Messer des zweiten Messerhalters einwirkenden Kräfte kann eine drehfeste Festlegung des zweiten Messerhalters durch jeweils eine Sollbruchstelle aufweisende Paßstifte erfolgen, die stimseitig den Stator durchgreifen und in dem Messerhalter zugeordnete Fixierwangen eingreifen. Zur erleichterten Materialzuführung sind jedem Messer des zweiten Messerhalters jeweils ein zweckmäßigerweise schwenkbar angeordneter Fließkeil zugeordnet, durch den das durch die Rotation des Rotors herangeführte Material in den Schnittspalt geführt wird.

Gemäß einem weiteren Ausführungsbeispiel umfaßt die Schlagschere ebenfalls zwei Messerhalter in der oben beschriebenen Anordnung. Im Unterschied zu dem zuvor beschriebenen Ausführungsbeispiel sind die beiden statorseitigen Messerhalter dieses Ausführungsbeispieles identisch ausgebildet, so daß auch der zweite Messerhalter über einen Stützarm gestellseitig drehfest festgelegt ist.

Bei Vorsehen einer Festlegung der Messerhalter über einen solchen Stützarm ist es zweckmäßig, die gestellseitige bzw. statorseitige Anlenkung dergestalt auszugestalten, daß eine Schnittspalteinstellung erfolgen kann. Dies kann beispielsweise dadurch herbeigeführt werden, daß die gestellseitige Anlenkung über einen Exzenter erfolgt.

Gemäß einer weiteren Ausgestaltung ist der drehbare Messerhalter direkt am Gestell der Schlagschere gelagert und kann mittels eines Schrittmotors in seiner unterschiedlichen Stellung gedreht werden. Bei einer Überlastsituation ist bei diesem Ausführungsbeispiel vorgesehen, daß ein sofortiger Maschinenstop herbeigeführt wird, um eine Beschädigung der Messer zu verhindern.

Bei Vorsehen von zwei Messerhaltem ist es zur Erhöhung der Standzeit der eingesetzten statorseitigen Messer zweckmäßig, wenn die beiden Messerhalter in der Summe eine solche Messer- bzw. Messeranordnungsanzahl aufweisen, die der Anzahl der Reihen der am Rotor angeordneten Hackmesser entspricht. Bei einer solchen Ausgestaltung braucht ein statorseitiger Messerwechsel erst dann durchgeführt zu werden, wenn auch die am Rotor angeordneten Hackmesser ausgewechselt werden müssen, auch wenn grundsätzlich die statorseitigen Messer, die sich nicht in der Schnittposition befinden, auch bei laufendem Betrieb grundsätzlich ausgetauscht werden könnten. Bei einer Schlagschere, deren Rotor sechs Hackmesserreihen trägt, weist demzufolge eine Ausgestaltung mit zwei Messerhaltem jeweils drei Messer bzw. Messeranordnungen auf.

Die Erfindung ist nachfolgend anhand eines Ausführungsbeispieles unter Bezugnahme auf die beigefügten Figuren erörtert. Es zeigen:
- **Fig. 1:**: Eine schematisierte Teilan- und -einsicht auf eine Stirnseite einer Schlagschere und
- **Fig. 2:**: Eine schematisierte Teilan- und -einsicht auf eine Stirnseite einer weiteren Schlagschere.

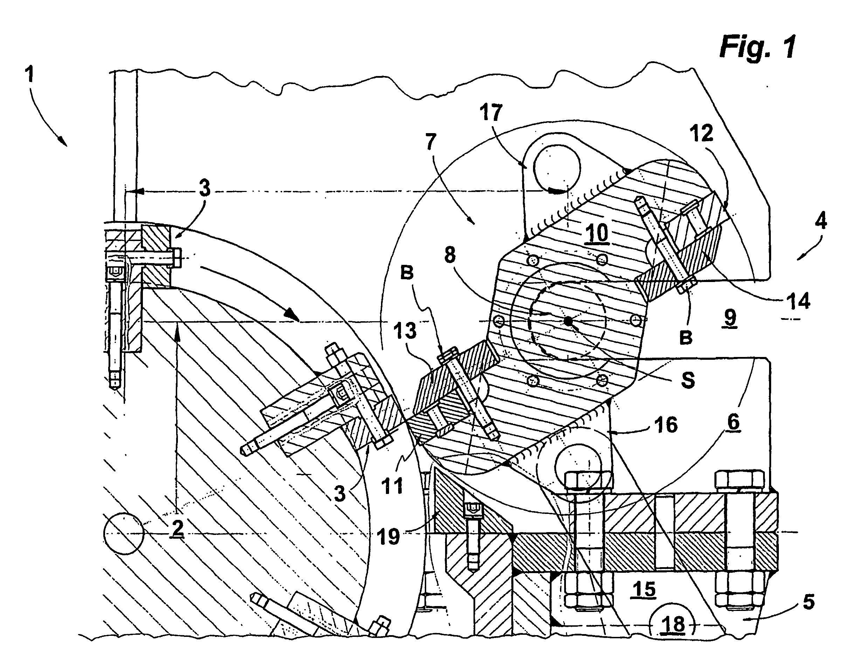

Eine Schlagschere 1 besteht aus einem motorisch entsprechend der in Figur 1 dargestellten Pfeilrichtung angetriebenen Rotor 2, auf dessen Mantelfläche eine Vielzahl von Hackmessern 3 angeordnet sind. Der Rotor 2 ist in den Stirnseiten eines als Stator dienenden Gehäuses 4 gelagert. Die Stirnseiten des Gehäuses 4 sind durch eine untere Jochplatte 5 und eine obere Jochplatte 6 gebildet. Statorseitig gehalten ist ein Messerhalter 7, der sich im wesentlichen über die gesamte Länge des Rotors 2 erstreckt. Der Messerhalter 7 ist um eine Schwenkachse S parallel zur Drehachse des Rotors 2 verlaufend verschwenkbar gelagert. Zu diesem Zweck umfaßt der Messerhalter 7 stimseitig jeweils einen Lagerzapfen 8, der in eine horizontal verlaufende Nut 9 der oberen Jochplatte 6 beginnend vom äußeren Rand der oberen Jochplatte 6 eingreift. Der Messerhalter 7 dieser Schlagschere 1 besteht im wesentlichen aus einem im Querschnitt etwa trapezförmigen Grundkörper 10, der Träger von zwei diametral einander gegenüberliegenden Messern 11, 12 ist. Die Messer 11, 12 sind jeweils mittels einer durch Bolzen B gehaltenen Druckplatte 13, 14 verklemmt an dem Grundkörper 10 gehalten. Das Messer 11 befindet sich bei der Darstellung der Figur 1 in seiner Schnittstellung. Mit dem Grundkörper 10 verbunden sind zum Festlegen des Messerhalters 7 gegenüber einer Verschwenkbewegung beim Betrieb der Schlagschere 1 über einen Stützarm 15 zwei Verbindungsnasen 16, 17. In der in Figur 1 dargestellten Stellung stützt sich der Messerhalter 7 mit seinem Grundkörper 10 mit der Verbindungsnase 16 an dem Stützarm 15 ab. Zu diesem Zweck durchgreift ein in dieser Figur nicht dargestellter Bolzen eine Durchbrechung des Stützarmes 15 sowie eine solche der Verbindungsnase 16. Der Stützarm 15 ist seinerseits über einen Bolzen 18 an der unteren Jochplatte 5 verschwenkbar angelenkt. Der Bolzen 18 weist eine Sollbruchstelle auf, so daß die beschriebene Abstützanordnung auch als Überlastsicherung bei einem Betrieb der Schlagschere 1 dient.

Um das zerkleinerte Material dem unterhalb des Rotors 2 angeordneten Sieb zuzuführen, ist ein Leitbock 19 unterhalb des in seiner Schnittposition befindlichen Messers 11 angeordnet.

In einem weiteren, in den Figuren nicht dargestellten Ausführungsbeispiel ist der Stützarm 15 über einen Exzenter statorseitig angelenkt, so daß durch eine Betätigung des Exzenters eine Einrichtung der Position des in seiner Schnittstellung befindlichen Messers 11 zur Schnittspaltein- bzw. - nachstellung erfolgen kann.

Ist das Messer 11 abgenutzt, wird der den Stützarm 15 mit der Verbindungsnase 16 verbindende Bolzen 18 entfernt, der Stützarm 15 herunter geschwenkt und anschließend der Messerhalter 7 beispielsweise entgegen dem Uhrzeigersinn verschwenkt, so daß sich nach dieser Verschwenkbewegung das Messer 12 in seiner Schnittposition befindet. Diese Position ist durch das Eingreifen des Verbindungsbolzens zum Festlegen des Messerhalters 7 über die Verbindungsnase 17 mit dem Stützarm 15 definiert. Dieser Messertausch läßt sich in wenigen Minuten realisieren, so daß durch den Stillstand der Schlagschere 1 kaum seine Produktivität beeinflußt ist. Bei einem Betrieb der Schlagschere 1 mit dem Messer 12 in seiner Schnittposition kann, wenn gewünscht, das Messer 11 bereits gegen ein neues oder neu angeschliffenes ausgetauscht werden.

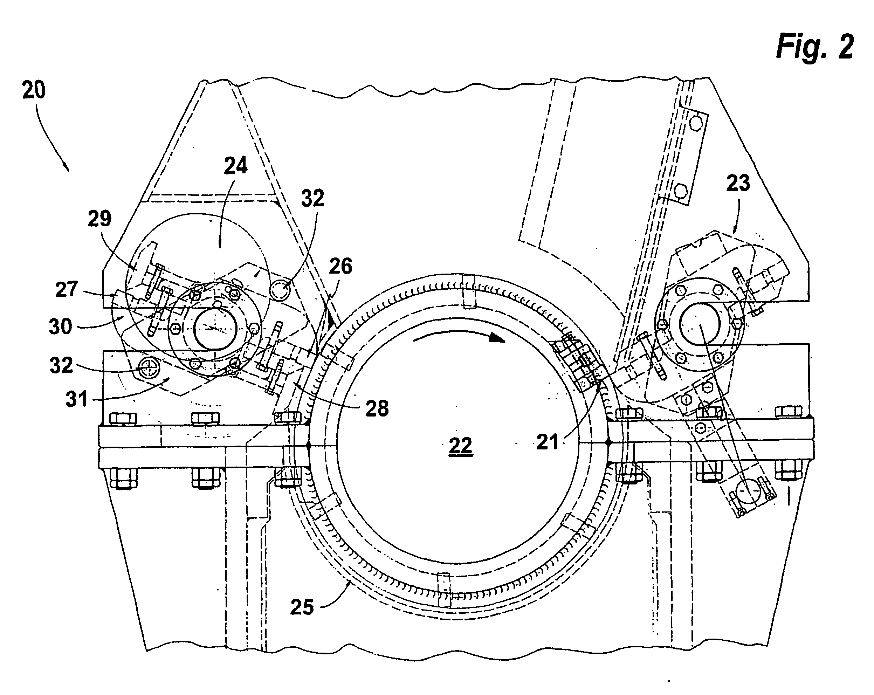

Figur 2 zeigt eine weitere Schlagschere 20, die grundsätzlich entsprechend aufgebaut ist wie die Schlagschere 1 der Figur 1, und einen mit Hackmessem 21 besetzten Rotor 22 sowie einen Messerhalter 23 aufweist. Etwa spiegelsymmetrisch zur vertikal verlaufenden Mittelebene des Rotors 22 ist der Schlagschere 20 ein weiterer Messerhalter 24 zugeordnet, der grundsätzlich entsprechend dem Messerhalter 23 aufgebaut ist und somit ebenfalls schwenkbar zum Stator - dem Gehäuse - gelagert ist. Der Messerhalter 24 dient einer Nachzerkleinerung des bereits durch den Messerhalter 23 zerkleinerten, jedoch nicht durch das Sieb 25 hindurch gefallenen Materiales. Der Messerhalter 24 umfaßt ebenfalls zwei Messer 26, 27 die in entsprechender Art und Weise wie beim Messerhalter 23 bzw. beim Messerhalter 7 der Schlagschere 1 gehalten sind. Zur Gewährleistung einer definierten Materialzufuhr in den Schnittspalt dieses Messerhalters 24 dienen jeweils ein jedem Messer 26 bzw. 27 zugeordneter Fließkeil 28 bzw. 29, die zur erleichterten Zugänglichkeit des Messers 26 bzw. 27 schwenkbar am Grundkörper 30 angelenkt sind. Der Messerhalter 24 ist über parallel zur Drehachse des Rotors 22 jeweils eine Stirnseite durchgreifende und in jeweils eine Fixierwange 31 eingreifende Bolzen 32 drehfest zum Gehäuse festgelegt. Diese Bolzen 32 weisen eine Sollbruchstelle auf, so daß diese drehfeste Anordnung gleichzeitig als Überlastsicherung dient.

### Zusammenstellung der Bezugszeichen

- 1: Schlagschere
- 2: Rotor
- 3: Hackmesser
- 4: Gehäuse
- 5: untere Jochplatte
- 6: obere Jochplatte
- 7: Messerhalter
- 8: Lagerzapfen
- 9: Nut
- 10: Grundkörper
- 11: Messer
- 12: Messer
- 13: Druckplatte
- 14: Druckplatte
- 15: Stützarm
- 16: Verbindungsnase
- 17: Verbindungsnase
- 18: Bolzen
- 19: Leitbock
- 20: Schlagschere
- 21: Hackmesser
- 22: Rotor
- 23: Messerhalter
- 24: Messerhalter
- 25: Sieb
- 26: Messer
- 27: Messer
- 28: Fließkeil
- 29: Fließkeil
- 30: Grundkörper
- 31: Fixierwange
- 32: Bolzen

- B: Bolzen
- S: Schwenkachse

## Patentansprüche

1. Schlagschere mit einem mit einzelnen Hackmessem (3, 21) in einer vorbestimmten Anordnung besetzten Rotor (2, 22) und mit zumindest einem gegenüber der Drehbewegung des Rotors (2, 22) grundsätzlich feststehenden, in einem zum Rotor (2, 22) statorseitig angeordneten Messerhalter (7, 23) gehaltenen Messer (11, 26) oder Messeranordnung, wobei der Messerhalter (7, 23) um eine Achse parallel zur Drehachse des Rotors (2, 22) gegenüber dem Stator (4) bewegbar ist, **dadurch gekennzeichnet, daß** der Messerhalter (7, 23) zumindest zwei, zweckmäßigerweise mit einem jeweils gleichen Winkelabstand zueinander angeordnete Messer (11, 12; 26, 27) oder Messeranordnungen trägt und um die parallel zur Drehachse des Rotors (2, 22) verlaufende Achse drehbar ist, so daß jedes Messer (11, 12; 26, 27) oder jede Messeranordnung des Messerhalters (7, 23) in eine mit den Hackmessem (3, 21) des Rotors (2, 22) zusammenwirkende Schnittstellung gebracht werden kann und in der Schnittstellung jeweils ein Messer (11, 12; 26, 27) oder eine Messeranordnung mit den Hackmessem des Rotors zusammenwirkt und in dieser Stellung jedes Messers (11, 26) oder jede Messeranordnung bezüglich des Zusammenwirkens mit den Hackmessern (3, 21) des Rotors (2, 22) festlegbar ist.

2. Schlagschere nach Anspruch 1, **dadurch gekennzeichnet, daß** der Messerhalter (7) an seinen beiden Enden jeweils einen Lagerzapfen (8) aufweist, der in einer jeweils in eine Stirnseite (6) des Stators (4) am äußeren Rand beginnende und horizontal verlaufende Lagernut (9) eingesetzt ist.

3. Schlagschere nach Anspruch 1 oder 2, **dadurch gekennzeichnet, daß** der Messerhalter (7, 23, 24) drehfest festlegbar ist.

4. Schlagschere nach Anspruch 3, **dadurch gekennzeichnet, daß** zur Festlegung des Messerhalters (7, 23) in der Schnittstellung eines Messers zumindest ein schwenkbar am Stator angelenkter und sich am Messerhalter abstützender Stützarm (15) vorgesehen ist, über den im wesentlichen die auf das in seiner Schnittposition befindlichen Messer (11, 26) einwirkenden Kräfte bei einem Betrieb der Schlagschere (1, 20) statorseitig abgeleitet werden.

5. Schlagschere nach Anspruch 4, **dadurch gekennzeichnet, daß** der zumindest eine Stützarm (15) am Stator (4) mittels eines eine Sollbruchstelle aufweisenden Bolzens (18) verschwenkbar angelenkt ist.

6. Schlagschere nach einem der Ansprüche 1 bis 5, **dadurch gekennzeichnet, daß** statorseitig ein zweiter Messerhalter (24) nach einem der Ansprüche 1 bis 3, zweckmäßigerweise in etwa einer Anordnung spiegelsymmetrisch zur Mittelebene des Rotors (20) angeordnet ist.

7. Schlagschere nach Anspruch 6, **dadurch gekennzeichnet, daß** dem Messerhalter (24) drehfest mit diesem verbundene Fixierwangen (31) zugeordnet sind, in die zur drehfesten Festlegung dieses Messerhalters (24) jeweils eine Stirnseite des Stators durchgreifende Bolzen (32) mit jeweils einer Sollbruchstelle eingreifen.

8. Schlagschere nach Anspruch 6 oder 7, **dadurch gekennzeichnet, daß** jedem Messer (26, 27) dieses Messerhalters (24) ein Fließkeil (28, 29), zweckmäßigerweise schwenkbar angelenkt, zugeordnet ist.

9. Schlagschere nach einem der Ansprüche 6 bis 8, **dadurch gekennzeichnet, daß** die Anzahl der Messer bzw. Messeranordnungen auf den beiden Messerhaltem der Anzahl der Reihen der am Rotor angeordneten Hackmesser entspricht.

## Claims

1. Guillotine shears, having a rotor (2, 22) which is fitted with separate chopping blades (3, 21) in a predetermined arrangement and having at least one blade (11, 26) or blade arrangement which is basically stationary relative to the rotational movement of the rotor (2, 22) and is held in a blade holder (7, 23) disposed on the stator side relative to the rotor (2, 22), the blade holder (7, 23) being moveable relative to the stator (4) about an axis, parallel to the axis of rotation of the rotor (2, 22) **characterised in that** the blade holder (7, 23) carries at least two blades (11, 12; 26, 27) or blade arrangements, which are disposed expediently at an identical angle spacing respectively relative to each other, and is rotatable about the axis which extends parallel to the axis of rotation of the rotor (2, 22) so that each blade (11, 12; 26, 27) or each blade arrangement of the blade holder (7, 23) can be brought into a cutting position which cooperates with the chopping blades (3, 21) of the rotor (2, 22) and, in the cutting position, one blade (11, 12; 26, 27) or one blade arrangement respectively cooperates with the chopping blades of the rotor and, in this position, each blade (11, 26) or each blade arrangement can be fixed with respect to cooperation with the chopping blades (3, 21) of the rotor (2, 22).

2. Guillotine shears according to claim 1, **characterised in that** the blade holder (7) has at its two ends respectively a bearing journal (8), which is inserted in a bearing groove (9) which commences respectively in one end-side (6) of the stator (4) at the exterior edge and extends horizontally.

3. Guillotine shears according to claim 1 or 2, **characterised in that** the blade holder (7, 23, 24) can be fixed non-rotatably.

4. Guillotine shears according to claim 3, **characterised in that**, in order to fix the blade holder (7, 23) in the cutting position of a blade, at least one support arm (15) is provided which is coupled pivotably on the stator and is supported on the blade holder, via which support arm the forces acting on the blade (11, 26) located in its cutting position are substantially dissipated on the stator side during operation of the guillotine shears (1, 20).

5. Guillotine shears according to claim 4, **characterised in that** the at least one support arm (15) is coupled pivotably on the stator (4) by means of a bolt (18) which has a predetermined breaking point.

6. Guillotine shears according to one of the claims 1 to 5, **characterised in that**, on the stator side, a second blade holder (24) according to one of the claims 1 to 3 is disposed expediently in an arrangement which is approximately mirror-symmetrical relative to the central plane of the rotor (20).

7. Guillotine shears according to claim 6, **characterised in that** fixing cheeks (31) are associated with the blade holder (24) and connected non-rotatably to the latter, in which fixing cheeks, bolts (32), which have respectively one predetermined breaking point and penetrate respectively one end-side of the stator, engage for non-rotatable fixing of this blade holder (24).

8. Guillotine shears according to claim 6 or 7, **characterised in that** a flow wedge (28, 29) is associated, expediently pivotably coupled, with each blade (26, 27) of this blade holder (24).

9. Guillotine shears according to one of the claims 6 to 8, **characterised in that** the number of blades or blade arrangements on the two blade holders corresponds to the number of rows of chopping blades disposed on the rotor.

## Revendications

1. Cisaille-guillotine comportant un rotor garni de lames de broyage (3, 21) unitaires selon une disposition préalablement définie et au moins une lame (11, 26) ou disposition tranchante, maintenue par un porte-lame (7, 23) qui est placé, par rapport au rotor (2, 22), du côté du stator et qui est en principe fixe par rapport à la rotation du rotor (2, 22), le porte-lame (7, 23) étant mobile par rapport au stator (4) sur un axe parallèle à l'axe de rotation du rotor (2, 22), **caractérisée en ce que** le porte-lame (7, 23) supporte au moins deux lames (11, 12; 26, 27) ou dispositions tranchantes, disposées judicieusement avec le même écart angulaire l'une par rapport à l'autre et qui sont rotatives sur un axe parallèle à l'axe de rotation du rotor (2, 22), de sorte que chaque lame (11, 12; 26, 27) ou chaque disposition tranchante du porte-lame (7, 23) puisse être mise dans une position de coupe agissant conjointement avec les lames de broyage (3, 21) du rotor (2, 22) et qu'en position de coupe, chaque lame (11, 12; 26, 27) ou disposition tranchante agisse conjointement avec les lames de broyage du rotor et que, dans cette position, chaque lame (11, 26) ou chaque disposition tranchante puisse être fixée pour pouvoir agir conjointement avec les lames de broyage (3, 21) du rotor (2, 22).

2. Cisaille-guillotine selon la revendication 1 **caractérisée en ce que** le porte-lame (7) présente à ses deux extrémités un bout d'arbre (8) qui est engagé dans une rainure 9 au tracé horizontal et commençant sur le bord extérieur d'une face frontale (6) du stator (4).

3. Cisaille-guillotine selon la revendication 1 ou 2 **caractérisée en ce que** le porte-lame (7, 23, 24) peut est fixé pour être non rotatif.

4. Cisaille-guillotine selon la revendication 3 **caractérisée en ce qu'**il est prévu, pour fixer le porte-lame (7, 23) dans la position de coupe d'une lame, au moins un bras-support (15) articulé de manière pivotante sur le stator et s'appuyant sur le porte-lame, au moyen duquel sont déviées vers le côté stator les forces s'exerçant essentiellement lors du fonctionnement de la cisaille-guillotine (1, 20) sur la lame (11, 26) se trouvant dans sa position de coupe.

5. Cisaille-guillotine selon la revendication 4, **caractérisée en ce qu'**au moins un bras-support (15) est articulé de manière pivotante sur le stator (4) au moyen d'un boulon (18) présentant un point destiné à la rupture.

6. Cisaille-guillotine selon l'une des revendications 1 à 5 **caractérisée en ce qu'**il est disposé judicieusement, du côté du stator, un second porte-lame (24) selon l'une des revendications 1 à 3 dans une structure quasiment symétrique par rapport au plan médian du rotor (20).

7. Cisaille-guillotine selon la revendication 6 **caractérisée en ce que** des joues de fixation (31) sont affectées au porte-lame (24), reliées de manière non rotative avec ce dernier, dans lesquelles s'engagent, à travers chaque face frontale du stator, afin de fixer de manière non rotative ce porte-lame (24), des boulons 32 présentant un point destiné à la rupture.

8. Cisaille-guillotine selon la revendication 6 ou 7 **caractérisée en ce qu'**une clavette flottante (28, 29) est articulée de manière judicieusement pivotante à chaque lame (26, 27) de ce porte-lame (24).

9. Cisaille-guillotine selon l'une des revendications 6 à 8 **caractérisée en ce que** le nombre des lames ou dispositions tranchantes sur les deux porte-lames correspond au nombre de rangées de lames de broyage disposées sur le rotor.
